(19) Europäisches Patentamt
European Patent Office
Office européen des brevets

(11) **EP 3 305 960 B1**

(12) **EUROPEAN PATENT SPECIFICATION**

(45) Date of publication and mention
of the grant of the patent:
**25.11.2020 Bulletin 2020/48**

(21) Application number: **16802396.8**

(22) Date of filing: **15.04.2016**

(51) Int Cl.:
*D06F 39/00* (2020.01)    *D06F 33/00* (2020.01)
*D06F 39/02* (2006.01)    *C02F 1/52* (2006.01)
*C02F 103/00* (2006.01)

(86) International application number:
**PCT/CN2016/079407**

(87) International publication number:
**WO 2016/192473 (08.12.2016 Gazette 2016/49)**

(54) **CONTROL METHOD FOR FLOCCULATION WASHING MACHINE, AND WASHING MACHINE**

STEUERUNGSVERFAHREN FÜR AUSFLOCKUNGSWASCHMASCHINE UND WASCHMASCHINE

PROCÉDÉ DE COMMANDE DESTINÉ À UNE MACHINE À LAVER PAR FLOCULATION, ET MACHINE À LAVER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2015 CN 201510290329**

(43) Date of publication of application:
**11.04.2018 Bulletin 2018/15**

(73) Proprietor: **Qingdao Haier Washing Machine Co., Ltd.**
**Qingdao, Shandong 266101 (CN)**

(72) Inventors:
• **XU, Sheng**
**Qingdao**
**Shandong 266101 (CN)**

• **DENG, Jinzhu**
**Qingdao**
**Shandong 266101 (CN)**
• **LI, Dong**
**Qingdao**
**Shandong 266101 (CN)**

(74) Representative: **Beck & Rössig**
**European Patent Attorneys**
**Cuvilliésstraße 14**
**81679 München (DE)**

(56) References cited:
WO-A2-2012/123927    CN-A- 104 420 123
CN-A- 104 514 122    CN-A- 104 652 095
JP-A- 2001 054 700    JP-A- 2002 119 794
JP-A- 2002 292 193    US-A1- 2002 121 484
US-A1- 2002 121 484    US-A1- 2013 327 361

## Description

## TECHNICAL FIELD

The present disclosure relates to the field of flocculation washing machines which perform self-cleaning treatment on water through flocculation. More specifically, the invention relates to a control method of a flocculation washing machine comprising the features of the preamble portion of claim 1 and further provides a flocculation washing machine adopting the control method.

## BACKGROUND

With the improvement of people's living standards, washing machines have become one of major household appliances in people's daily life. The washing process of a washing machine mainly comprises several stages of washing, rinsing and dewatering. In the washing stage, water and a detergent are fed into the washing machine, and clothes are washed; and after the rinsing stage begins, in order to rinse out dirt and the residual detergent, much water is needed or many times of rinsing needs to be performed to rinse the clothes, so that a large amount of water is consumed. Even if a water-saving drum washing machine is used, the clothes also need to be rinsed at least twice to get cleaned, and at least 30L or above of running water needs to be consumed in the process. Sometimes, dirt on the clothes is less or the use amount of the detergent is less, the clothes can be cleaned after being rinsed twice, and because a user selects three times of rinsing, waste of water can also be caused. For example, a 6Kg full-automatic washing machine generally consumes about 100 litres of water for rinsing twice. How to thoroughly wash clothes and save water and electricity at the same time is one of the focuses of consumers.

CN 104372574 A discloses a washing machine with a circulating water treatment function and a control method for the washing machine. The washing machine comprises an outer drum, a washing structure arranged in the outer drum and a flocculation water treatment device arranged under the outer drum, wherein the flocculation water treatment device comprises a flocculation treatment unit and a filtering unit, and the flocculation treatment unit comprises a flocculation drum communicating with the outer drum, and a flocculant deliverer for delivering a flocculant into the flocculation drum, and water is discharged from the outer drum to the flocculation drum for flocculation treatment. The filtering unit comprises a filtering container and a filtering screen arranged in the filtering container, the filtering container communicates with the flocculation drum and the outer drum, and water after flocculation treatment in the flocculation drum is filtered and re-discharged into the outer drum for reuse. In CN 104372574 A, the flocculation filtration-treated water is circulated until washing is finished, and the water is discharged into the circulating water treatment device for cleaning of the flocculation treatment unit and the filtering unit, and then is drained. The flocculation washing machine provided by CN 104372574 A has the characteristics that water is saved, water pollution is reduced, and the environment is protected. A corresponding washing machine in also known from US 2013/0327361 A1.

The above washing machine with the circulating water treatment function needs to possess a water treatment process of a common washing machine as follows: the dirt water after washing is discharged from a washing drum to the flocculation drum. After an intake water volume of the flocculation drum reaches a set value, a flocculant is delivered, so that the flocculant reacts with the detergent and the sewage to generate flocculates; the flocculates are filtered out and/or flocculation water stands for stratification, so that clean water is separated from the flocculation water; and the treated clean water flows back to the outer drum to complete once flocculation circulation.

The amount of water in each flocculation circulation treatment is smaller than the total amount of washing water in the outer drum, so that multiple times of treatment need to be performed to complete the flocculation treatment of the washing water. Therefore, how to accurately determine the number of times N of flocculation circulation needed by the flocculation treatment process becomes very important.

In addition, it will lead to a poor effect on flocculation or a failure of the flocculation if a dose of the flocculant being used has a relatively larger deviation (the flocculate particles are too small to be effectively stratified when the dose of the flocculant is less, and the density of the flocculates is greater so that it cannot achieve effective stratification when the dose of flocculant is excessive). So, the dose of the flocculant in each flocculation circulation must be accurately controlled to prevent the above-mentioned conditions from occurring.

## SUMMARY

The technical problem to be solved in the present disclosure is to overcome the defects in the prior art and to more accurately control the flocculation process.

To achieve the above object of the present disclosure, the invention provides a control method as defined by claim 1. Advantageous embodiments including a flocculation washing machine implementing said method are indicated in further claims.

The dose of the flocculant $M_n$ may include $M_1$ which corresponds to the first time of flocculation circulation, $M_2$ which corresponds to the second time of flocculation circulation, ..., and $M_n$ which corresponds to the Nth time of flocculation circulation.

In one embodiment, specific steps for determining the number of times N of flocculation circulation and the dose of the flocculant $M_n$ delivered corresponding to each flocculation circulation are as follows:

1) Obtaining an amount of the washing water V by a selection of a user and/or a detection of the washing machine, and invoking a corresponding amount $V_1$ of water treated in each flocculation circulation and an amount $V_2$ of residual water after treatment and returning; and obtaining a dilution rate $\mu$ after each time of flocculation treatment according to $\mu = (V_1 - V_2) / (V - V_2)$.

2) Obtaining a concentration $C_n$ of the detergent in an outer drum after the n-th time of flocculation circulation according to $C_n = C \mu^n$ (n is any integer larger than 0);

3) Comparing $C_n$ with a set value $C_{min}$ to obtain the number of times N of flocculation circulation; and

4) Obtaining a dose of the flocculant delivered in the n-th time of flocculation circulation $M_n$ according to $M_n = (V_1 - V_2)^* \alpha C \mu^{n-1}$.

The amount $V_2$ of the residual water after treatment and returning in the flocculation drum does not exist before the very first time of flocculation circulation. Therefore, in step 4), the dose $M_1$ of the flocculant delivered in the first time of flocculation circulation may satisfy $M_1 = \alpha m V_1 / V = V_1 \alpha C$; and the dose of the flocculant delivered in other times of flocculation circulation is still equal to the dose of the flocculant delivered in the n-th time of flocculation circulation $M_n = (V_1 - V_2) * \alpha C \mu^{n-1}$.

In another embodiment, the amount $V_1$ of water treated in each flocculation circulation is the maximum capacity of the flocculation drum when the amount of the washing water V is larger than a set value. The amount $V_1$ of water treated in each flocculation circulation is 4/5 to 1/2 of the maximum capacity of the flocculation drum when the amount of the washing water V is smaller than the set value; and preferably, $V_1$ is 4/5 of the maximum capacity of the flocculation drum.

The amount $V_2$ of residual water after treatment and returning may be a set value smaller than 1/2 of the maximum capacity of the flocculation drum; and preferably, $V_2$ may be a set value between 0.5 L and 3 L.

In another embodiment, a value $C_n$ closest to the set value $C_{min}$ and smaller than $C_{min}$ is determined, and then the number of times N of flocculation circulation is n corresponding to the determined value.

In step 4), $\alpha$ may be a corresponding set value according to characteristics of the detergent and the flocculant.

In yet another embodiment, after the washing procedure of the washing machine ends, a rinsing procedure starts running by utilizing the washing water, and simultaneously the washing water is subjected to N times of flocculation circulation, wherein the flocculant is delivered into the flocculation drum in an amount of $M_n$ in each flocculation circulation.

In yet another embodiment, a specific working process of the washing machine is as follows:

S1) obtaining an amount of the washing water V and an amount of the detergent delivered m after the washing machine starts running the washing procedure, and obtaining a concentration of the detergent C according to $C = m / V$;

S2) determining a number of times N of flocculation circulation of the washing water and a dose $M_n$ of the flocculant delivered corresponding to each flocculation circulation according to the concentration of the detergent C;

S3) after the washing procedure ends, allowing the washing water in the outer drum to flow into the flocculation drum until the amount $V_1$ of washing water for flocculation treatment in the flocculation drum is, delivering the flocculant in an amount of $M_n$ into the flocculation drum, performing flocculation treatment on the washing water in the flocculation drum, and thereafter allowing water in the flocculation drum to flow back to the outer drum until an amount of residual water in the flocculation drum is $V_2$;

S4) adding 1 to an accumulated value of the number of times of flocculation circulation, and determining whether the accumulated value reaches N or not; if not, continuously executing step S3) while substituting the accumulated value into step S3) as n; and if yes, executing step S6);

S5) starting running the rinsing procedure by utilizing the washing water in the outer drum while executing step S3) and step S4); and

S6) after the rinsing procedure ends, completely draining out water in the outer drum and the flocculation drum, and cleaning the flocculation drum.

The present disclosure further provides a flocculation washing machine adopting the above control method as indicated in claim 9. The washing machine is characterized in that: a flow sensor is arranged on a water intake structure of the washing machine and/or a liquid level sensor is disposed in the outer drum to detect an amount of washing water V; and a flow sensor is arranged on an automatic detergent deliverer to detect an amount of a detergent delivered m.

In one embodiment of said washing machine, a liquid level sensor is disposed in a flocculation drum and/or a flow sensor is arranged on a pipe, connected with the outer drum, of the flocculation drum to detect an amount of water in the flocculation drum; and a flow sensor is arranged on an automatic flocculant deliverer to detect a dose of a flocculant.

The present disclosure has the following beneficial effects compared with the prior art:

1. By the above modes, the flocculation treatment and the rinsing procedure of the washing machine are synchronously executed, and at an end node, the concentration of the detergent in the outer drum is lower than a set value, thereby achieving the purpose of removing detergent residual on clothes.

2. By the above modes, different flocculation treatment processes matching with different washing procedures are achieved, and the dose of the flocculant delivered are accurately controlled, thereby preventing a condition that flocculates cannot be stratified from occurring. Besides, the number of times of flocculation circulation is also accurately determined, thereby preventing a condition that the detergent is treated incompletely or the number of times of flocculation circulation is excessive to waste electric power from occurring.

3. In the present disclosure, the number of times N of flocculation circulation and the dose of the flocculant delivered corresponding to each flocculation circulation $M_n$ can be obtained accurately only based on the concentration of the detergent in the washing procedure, thereby achieving the accurate control on the flocculation treatment process of the washing machine.

4. The control method is simple and brief, has remarkable effects and is suitable for popularization and application.

Specific embodiments of the present disclosure are further described below in detail with reference to the accompanying drawings.

## BRIEF DESCRIPTION OF THE DRAWINGS

Fig. 1 is a schematic diagram of an embodiment of the present disclosure;
Fig. 2 and Fig. 3 are flow charts of a control method of a flocculation washing machine according to an embodiment of the present disclosure; and
Fig. 4 is a flow chart of determination of a number of times N of flocculation circulation according to an embodiment of the present disclosure.

## DETAILED DESCRIPTION

The present disclosure is further described below in detail with reference to embodiments.

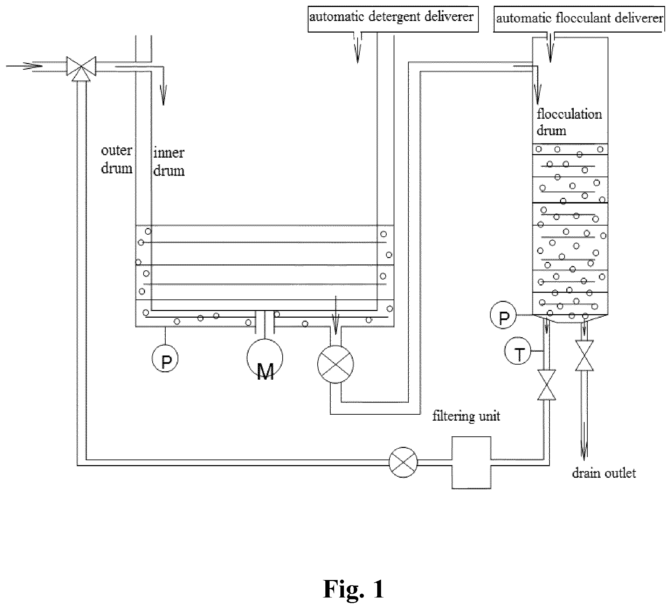

As shown in Fig. 1, a washing machine of the embodiment of the present disclosure is internally provided with a conventional washing machine structure and is also provided with a circulation water treatment device. The washing machine structure comprises an outer drum, an inner drum disposed inside the outer drum, a door body, a control panel, a water intake system and a washing motor, the bottom and an upper part of the outer drum are connected with a casing frame through a damper and a suspension spring, respectively, and the water intake system comprises a water intake structure and an automatic detergent delivering device. The outer drum is a containing structure for containing washing water, and the inner drum disposed inside the outer drum is a washing structure. The outer drum is in communication with the water intake structure.

In the embodiments of the present disclosure, a flow sensor is arranged on the water intake structure of the washing machine and/or a liquid level sensor is disposed in the outer drum to detect an amount of washing water V; and a flow sensor is arranged on the automatic detergent deliverer to detect an amount of detergent delivered m.

In the embodiments of the present disclosure, the circulating water treatment device at least comprises a flocculation treatment unit; the flocculation treatment unit comprises a flocculation drum in communication with the outer drum and a flocculant deliverer by which a flocculant is delivered into the flocculation drum, and water is drained from the outer drum into the flocculation drum for flocculation treatment.

A liquid level sensor is disposed in the flocculation drum and/or a flow sensor is arranged on a pipe, connected with the outer drum, of the flocculation drum to detect an amount of water in the flocculation drum; and a flow sensor is arranged on the automatic flocculant deliverer to detect a dose of flocculant delivered.

The flocculation drum is provided with a water inlet, a water return opening and a drain outlet; a water outlet of the outer drum is in communication with the water inlet of the flocculation drum through a pipe equipped with a first water pump, and the water return opening of the flocculation drum is in communication with a water inlet of the outer drum through a pipe equipped with a second water pump, thereby forming a controllable circulation loop of washing water between the outer drum and the flocculation drum. The drain outlet of the flocculation drum is in communication with the external of the washing machine through a pipe equipped with a drainage valve, and the drain outlet drains out sewage and flocculates after washing is completed.

Preferably, the circulating water treatment device further comprises a filtering unit; the filtering unit performs filtering treatment on water after flocculation treatment in the flocculation treatment unit to separate flocculates from clean water. However, flocculates can also be separated from clean water without a filtering device, for example, a water level sensor is disposed in the flocculation drum to ensure that the water level of the flocculation drum always keeps a certain height, so that flocculates floating on the water surface of the flocculation drum are always left in the flocculation drum, and the purpose of removing flocculates in flocculation water is also achieved.

In the embodiments of the present disclosure, an amount of the washing water V and an amount of the detergent delivered m in the washing procedure are obtained by detection, and a concentration of the detergent C is obtained according to C = m / V. And a number of times N of flocculation circulation and a dose of the flocculant delivered corresponding to each flocculation circulation $M_n$ are determined according to the concentration of detergent C.

By the above modes, different flocculation treatment processes are matching with different washing procedures, and the dose of the flocculant delivered is accurately controlled to prevent a condition that flocculates cannot be stratified from occurring. Besides, the number of times of flocculation circulation is also accurately determined to prevent a condition that the detergent is treated incompletely or the number of times of flocculation circulation is excessive to waste electric power from occurring. Further, in the present disclosure, the number of times N of flocculation circulation and the dose $M_n$ of the flocculant delivered corresponding to each flocculation circulation can be obtained accurately only based on the concentration of the detergent in the washing procedure, and the accurate control on the flocculation treatment processes of the washing machine is achieved.

**Embodiment 1**

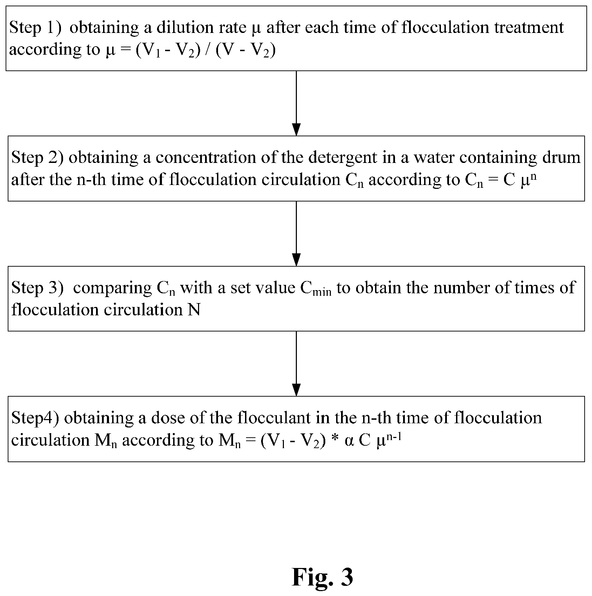

As shown in Fig. 3, in this embodiment, specific steps for determining a number of times N of flocculation circulation and a dose of a flocculant delivered corresponding to each flocculation circulation $M_n$ are as follows:

> 1) an amount of washing water V is selected by a user and/or detected by a washing machine to invoke a corresponding amount $V_1$ of water in each flocculation circulation and an amount $V_2$ of residual water after treatment and returning; and a dilution rate $\mu$ in each flocculation circulation is obtained according to $\mu = (V_1 - V_2) / (V - V_2)$;
> 2) a concentration $C_n$ of a detergent in an outer drum after the n-th time of flocculation circulation is obtained according to $C_n = C \mu^n$ (n is any integer larger than 0);
> 3) $C_n$ is compared with a set value $C_{min}$ to obtain the number of times N of flocculation circulation; and
> 4) a dose of the flocculant delivered in the n-th time of flocculation circulation $M_n$ is obtained according to $M_n = (V_1 - V_2) * \alpha C \mu^{n-1}$.

In this embodiment, the amount $V_2$ of the residual water after treatment and returning in the flocculation drum does not exist before the very first time of flocculation circulation, so that, a special condition exists in step 4). Namely the dose of the flocculant delivered in the first time of flocculation circulation $M_1 = \alpha m V_1 / V = V_1 \alpha C$; and the dose of the flocculant delivered in other times of flocculation circulation is still equal to the dose of the flocculant delivered in the n-th time of flocculation circulation $M_n = (V_1 - V_2) * \alpha C \mu^{n-1}$ ($M_n$ includes $M_2$ corresponding to the second time of flocculation circulation, ... and $M_n$ corresponding to the n-th time of flocculation circulation).

According to the invention, the amount of water treated in flocculation circulation is an amount of water in the flocculation drum during the flocculation treatment. The amount $V_1$ of water treated in each flocculation circulation is the maximum capacity of the flocculation drum when the amount of the washing water V is larger than a set value; and the amount $V_1$ of water treated in each flocculation circulation is 4/5 to 1/2 of the maximum capacity of the flocculation drum when the amount of the washing water V is smaller than the set value. Preferably, $V_1$ is 4/5 of the maximum capacity of the flocculation drum.

In this embodiment, the amount $V_2$ of residual water after treatment and returning is a set value which is smaller than 1/2 of the maximum capacity of the flocculation drum; and preferably, $V_2$ is a set value between 0.5 L and 3 L.

In this embodiment, in step 4), $\alpha$ is a corresponding set value according to characteristics of the detergent and the flocculant. Preferably, $\alpha$ includes a plurality of different values $\alpha_1$, $\alpha_2$, $\alpha_3$, $\alpha_4$, ... and $\alpha_m$ stored in the washing machine; and each value respectively corresponds to different types of detergents and flocculants to improve the determination accuracy.

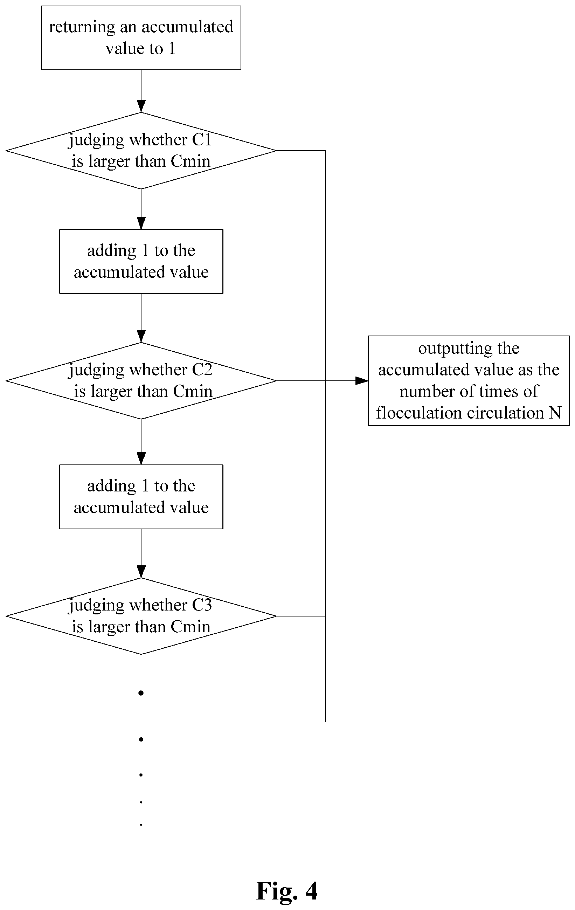

As shown in Fig. 4, in this embodiment, the number of times N of flocculation circulation is obtained in step 3) as follows: a value $C_n$ closest to the set value $C_{min}$ and smaller than $C_{min}$ is determined, and then the number of times N of flocculation circulation is n corresponding to the determined value. Specific determination steps are as follows:

> 31) an accumulated value is initialized and is returned to 1;
> 32) $C_1$ is compared with the set value $C_{min}$, and step 30) is executed if $C_1$ is larger than the set value $C_{min}$; otherwise, the accumulated value adds 1 and step 33) is executed;
> 32) $C_2$ is compared with the set value $C_{min}$, and step 30) is executed if $C_2$ is larger than the set value $C_{min}$; otherwise, the accumulated value adds 1 and step 34) is executed,... ;
> 30) the accumulated value at this time is taken as the number of times N of flocculation circulation and is outputted.

By the above modes, the corresponding $C_n$ closest to the set value $C_{min}$ and smaller than $C_{min}$ can be quickly determined, and the corresponding number of times N of flocculation circulation can be obtained. Therefore, the concentration of the detergent in the washing drum is smaller than the set value after the flocculation treatment circulates for N times, thereby achieving the purpose of removing detergent residual on the clothes. Besides, an end time node of a rinsing procedure can be accurately controlled through the above determination, improving the control accuracy of the washing machine.

**Embodiment 2**

In this embodiment, after the washing procedure of the washing machine ends, a rinsing procedure starts running by utilizing the washing water, and simultaneously the washing water is subjected to N times of flocculation circulation, wherein the flocculant is delivered into the flocculation drum in an amount of $M_n$ in each flocculation circulation.

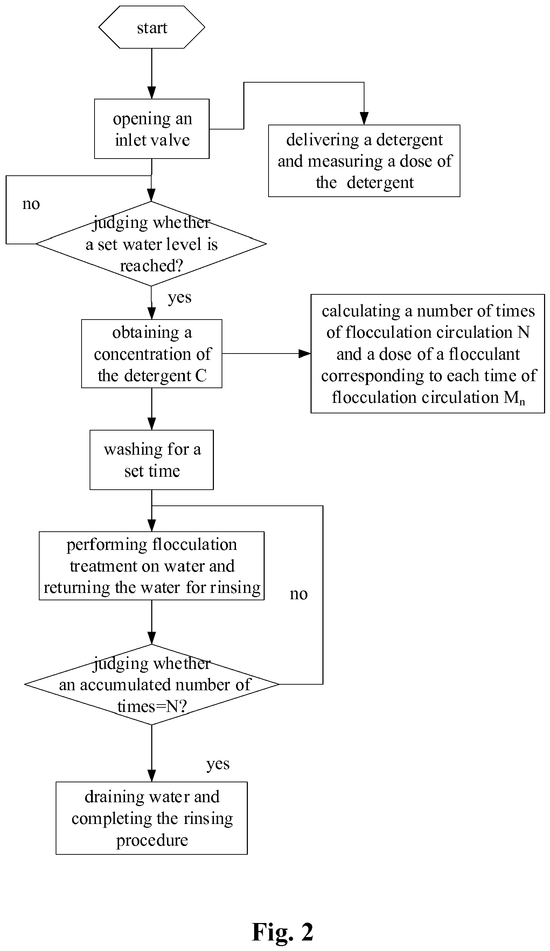

As shown in Fig. 2, a specific working process of the washing machine is as follows:

S1) an amount of the washing water V and an amount of the detergent delivered m are obtained by detection after the washing machine starts running the washing procedure, and a concentration of the detergent C is obtained according to C = m / V;

S2) the number of times N of flocculation circulation of washing water and a dose $M_n$ of the flocculant delivered corresponding to each flocculation circulation are determined according to the concentration of the detergent C;

S3) the washing procedure ends, the washing water in the outer drum flows into the flocculation drum until the amount $V_1$ of washing water in the flocculation drum is, and the flocculant is delivered into the flocculation drum in an amount of $M_n$; and after the washing water in the flocculation drum is subjected to flocculation treatment, water in the flocculation drum flows back to the outer drum until an amount of residual water in the flocculation drum is $V_2$;

S4) an accumulated value of the number of times of flocculation circulation adds 1, and whether the accumulated value reaches N or not is determined; if not, step S3) is continuously executed, and the accumulated value is substituted as n; and if so, step S6) is executed;

S5) the rinsing procedure starts running by utilizing the washing water in the outer drum while step S3) and step S4) are executed; and

S6) the rinsing procedure ends, water in the outer drum and the flocculation drum is completely drained out, and the flocculation drum is cleaned.

In this embodiment, the number of times N of flocculation circulation and the dose $M_n$ of the flocculant delivered corresponding to each flocculation circulation are obtained in step S2) according to the determination method from step 1) to step 4) in the embodiment 1.

By the above modes, the flocculation treatment and the rinsing procedure of the washing machine are synchronously executed, and at an end node, the concentration of the detergent in the outer drum is lower than the set value, thereby achieving the purpose of removing detergent residual on the clothes; and further, the dose of the flocculant and the number of times of flocculation circulation are accurately controlled, thereby improving the control accuracy of the flocculation treatment process of the washing machine.

The implementation solutions in the above embodiments are only for describing preferred embodiments of the present disclosure and are not intended to limit the concept and scope of the present disclosure. Without departing from the design concept of the present disclosure, various changes and modifications can be made by those skilled in the art within the scope of the appended claims.

**Claims**

1. A control method of a flocculation washing machine, said flocculation washing machine comprising an outer drum for containing washing water and a circulation water treatment device including a flocculation drum in communication with the outer drum and a flocculant deliverer by which a flocculant is delivered to the flocculation drum, wherein water from the outer drum is drained into the flocculation drum for flocculation treatment and wherein the amount of water treated in a flocculation circulation is an amount of water in the flocculation drum during flocculation treatment;

   **characterized by**
   acquiring an amount of washing water V and an amount of a detergent delivered m in a washing procedure to obtain a concentration of the detergent C = m / V;
   determining a number of times N of flocculation circulation of the washing water and a dose of a flocculant $M_n$ corresponding to each flocculation circulation according to the concentration of the detergent C.

2. The method according to claim 1 comprising the following specific steps,

   1) obtaining the amount of the washing water V by a selection of a user and/or a detection of the washing machine, and invoking a corresponding amount $V_1$ of water treated in each flocculation circulation and an amount $V_2$ of residual water after treatment and returning; and obtaining a dilution rate $\mu$ after each flocculation treatment according to $\mu = (V_1 - V_2) / (V - V_2)$;
   2) obtaining a concentration of the detergent $C_n$ in an outer drum after a n-th time of flocculation circulation according to $C_n = C \mu^n$, which n is any integer larger than 0;
   3) comparing $C_n$ with a set value $C_{min}$ to obtain the number of times N of flocculation circulation; and
   4) obtaining a dose of the flocculant $M_n$ delivered in the n-th time of flocculation circulation according to $M_n = (V_1 - V_2) * \alpha C u^{n-1}$.

**3.** The method according to claim 2, wherein the amount $V_1$ of water treated in each flocculation circulation is a maximum capacity of a flocculation drum when the amount of the washing water V is larger than a set value; and the amount $V_1$ of water treated in each flocculation circulation is 4/5 to 1/2 of the maximum capacity of the flocculation drum when the amount of the washing water V is smaller than the set value.

**4.** The method according to claim 2, wherein the amount $V_2$ of the residual water after treatment and returning is an amount of residual water in a flocculation drum after the flocculation treatment, and $V_2$ is a set value smaller than 1/2 of a maximum capacity of the flocculation drum.

**5.** The method according to claim 2, wherein a value $C_n$ closest to the set value $C_{min}$ and smaller than $C_{min}$ is determined, and then the number of times N of flocculation circulation is n corresponding to the value determined.

**6.** The method according to claim 2, wherein, in step 4), a dose $M_1$ of the flocculant delivered in a first time of flocculation circulation satisfies $M_1 = \alpha \, m \, V_1 / V = V_1 \, \alpha \, C$.

**7.** The method according to any one of claims 1 to 6, wherein, after the washing procedure of the washing machine ends, a rinsing procedure starts running by utilizing the washing water, and simultaneously the washing water is subjected to N times of flocculation circulation, and the flocculant is delivered into the flocculation drum in an amount $M_n$ of in each flocculation circulation.

**8.** The method according to claim 7, wherein a specific working process of the washing machine is as follows:

S1) obtaining the amount of the washing water V and the amount of the detergent delivered m by detection after the washing machine starts running the washing procedure, and obtaining the concentration of the detergent C according to $C = m / V$;
S2) determining the number of times N of flocculation circulation of the washing water and the dose $M_n$ of the flocculant delivered corresponding to each flocculation circulation according to the concentration of the detergent C;
S3) after the washing procedure ends, allowing the washing water in an outer drum to flow into the flocculation drum until the amount $V_1$ of washing water in the flocculation drum is, delivering the flocculant in the amount of $M_n$ into the flocculation drum, performing flocculation treatment on the washing water in the flocculation drum, and thereafter allowing water in the flocculation drum to flow back to the outer drum until an amount $V_2$ of residual water in the flocculation drum is;
S4) adding 1 to the number of times of flocculation circulation to get an accumulated value, and determining whether the accumulated value reaches N or not; if not, continuously executing step S3) while substituting the accumulated value into step S3) as n; and if yes, executing step S6);
S5) starting running the rinsing procedure by utilizing the washing water in the outer drum while executing step S3) and step S4); and
S6) after the rinsing procedure ends, completely draining out water in the outer drum and the flocculation drum, and cleaning the flocculation drum.

**9.** A flocculation washing machine adopting the control method according to any one of claims 1 to 8, said flocculation washing machine comprising an outer drum for containing washing water and a circulation water treatment device including a flocculation drum in communication with the outer drum and a flocculant deliverer by which a flocculant is delivered to the flocculation drum, wherein water from the outer drum is drained into the flocculation drum for flocculation treatment;
wherein a flow sensor is arranged on a water intake structure of the washing machine and/or a liquid level sensor is disposed in an outer drum to detect an amount of washing water V; and a flow sensor is arranged on an automatic detergent deliverer to detect an amount of a detergent delivered m.

**10.** The washing machine according to claim 9, wherein a liquid level sensor disposed in the flocculation drum and/or a flow sensor is arranged on a pipe for connecting the outer drum with the flocculation drum to detect an amount of water in the flocculation drum; and
a flow sensor is arranged on an automatic flocculant deliverer to detect a dose of a flocculant.

**Patentansprüche**

**1.** Steuerungsverfahren für eine Ausflockungswaschmaschine, wobei die Ausflockungswaschmaschine eine äußere Trommel zur Aufnahme von Waschwasser und eine Zirkulationswasserbehandlungsvorrichtung umfasst, die eine Ausflockungstrommel in Verbindung mit der äußeren Trommel und einen Ausflockungsmittelzuführer einschließt, durch den ein Ausflockungsmittel der Ausflockungstrommel zugeführt wird, wobei Wasser von der äußeren Trommel zur Ausflockungsbehandlung in die Ausflockungstrommel abgelassen wird und wobei die in einem Ausflockungskreislauf behandelte Wassermenge eine Wassermenge in der Ausflockungstrommel während der Ausflockungsbehandlung ist; **gekennzeichnet durch**

Erfassen einer Menge an Waschwasser V und einer Menge eines Waschmittels m, das in einem Waschvorgang abgegeben wird, um eine Konzentration des Waschmittels $C = m / V$ zu erhalten;

Bestimmen einer Anzahl von Malen N der Ausflockungszirkulation des Waschwassers und einer Dosis eines Ausflockungsmittels $M_n$ entsprechend jeder Ausflockungszirkulation gemäß der Konzentration des Waschmittels C.

2. Verfahren nach Anspruch 1, umfassend die folgenden spezifischen Schritte:

   1) Erhalten der Menge des Waschwassers V durch eine Auswahl eines Benutzers und/oder eine Ermittlung der Waschmaschine und Aufrufen einer entsprechenden Menge $V_1$ des in jeder Ausflockungszirkulation behandelten Wassers und einer Menge $V_2$ des Restwassers nach der Behandlung und Rückführung; und Erhalten einer Verdünnungsrate $\mu$ nach jeder Ausflockungsbehandlung gemäß $\mu = (V_1 - V_2) / (V - V_2)$;

   2) Erhalten einer Konzentration des Waschmittels $C_n$ in einer äußeren Trommel nach einem n-ten Mal der Ausflockungszirkulation gemäß $C_n = C \mu^n$, wobei n eine ganze Zahl größer als 0 ist;

   3) Vergleichen von $C_n$ mit einem Sollwert $C_{min}$, um die Anzahl der Male N der Ausflockungszirkulation zu erhalten; und

   4) Erhalten einer Dosis des Ausflockungsmittels $M_n$, die beim n-ten Mal der Ausflockungszirkulation abgegeben wird, gemäß $M_n = (V_1 - V_2) * \alpha C\mu^{n-1}$.

3. Verfahren nach Anspruch 2, wobei die Menge $V_1$ des in jeder Ausflockungszirkulation behandelten Wassers eine maximale Kapazität einer Ausflockungsstrommel ist, wenn die Menge des Waschwassers V größer als ein Sollwert ist; und

   wobei die Menge $V_1$ des in jeder Ausflockungszirkulation behandelten Wassers 4/5 bis 1/2 der maximalen Kapazität der Ausflockungsstrommel ist, wenn die Menge des Waschwassers V kleiner als der Sollwert ist.

4. Verfahren nach Anspruch 2, wobei die Menge $V_2$ des Restwassers nach der Behandlung und Rückführung eine Restwassermenge in einer Ausflockungstrommel nach der Ausflockungsbehandlung ist, und $V_2$ ein Sollwert kleiner als 1/2 einer maximalen Kapazität der Ausflockungstrommel ist.

5. Verfahren nach Anspruch 2, wobei ein Wert $C_n$ bestimmt wird, der dem Sollwert Cmin am nächsten kommt und kleiner als Cmin ist, und dann die Anzahl der Male N der Ausflockungszirkulation n ist, die dem bestimmten Wert entspricht.

6. Verfahren nach Anspruch 2, wobei in Schritt 4) eine Dosis $M_1$ des Ausflockungsmittels, die bei einem ersten Mal der Ausflockungszirkulation abgegeben wird, $M_1 = \alpha m V_1 / V = V_1 \alpha C$ erfüllt.

7. Verfahren nach einem der Ansprüche 1 bis 6, wobei nach Beendigung des Waschvorgangs der Waschmaschine ein Spülvorgang unter Verwendung des Waschwassers beginnt und gleichzeitig das Waschwasser N-mal einer Ausflockungszirkulation unterworfen wird und das Ausflockungsmittel in jeder Ausflockungszirkulation in einer Menge $M_n$ in die Ausflockungstrommel abgegeben wird.

8. Verfahren nach Anspruch 7, wobei ein spezieller Arbeitsprozess der Waschmaschine wie folgt abläuft:

   S1) Erhalten der Menge des Waschwassers V und der Menge des abgegebenen Waschmittels m durch Ermittlung, nachdem die Waschmaschine den Waschvorgang gestartet hat, und Erhalten der Konzentration des Waschmittels C gemäß $C = m / V$;

   S2) Bestimmen der Anzahl von Malen N der Ausflockungszirkulation des Waschwassers und der Dosis $M_n$ des entsprechend jeder Ausflockungszirkulation abgegebenen Ausflockungsmittels gemäß der Konzentration des Waschmittels C;

   S3) nach Beendigung des Waschvorgangs, Zulassen, dass das Waschwasser in einer äußeren Trommel in die Ausflockungstrommel fließt, bis die Menge $V_1$ des Waschwassers in der Ausflockungstrommel erreicht ist, Abgeben des Ausflockungsmittels in der Menge $M_n$ in die Ausflockungstrommel, Durchführen einer Ausflockungsbehandlung des Waschwassers in der Ausflockungstrommel und danach Zulassen, dass das Wasser in der Ausflockungstrommel in die äußere Trommel zurückfließt, bis eine Menge $V_2$ des Restwassers in der Ausflockungstrommel erreicht ist;

   S4) Addieren von 1 zur Anzahl von Malen der Ausflockungszirkulation, um einen akkumulierten Wert zu erhalten, und Bestimmen, ob der akkumulierte Wert N erreicht oder nicht; wenn nicht, kontinuierliches Ausführen von Schritt S3), wobei der akkumulierte Wert in Schritt S3) als n ersetzt wird; und wenn ja, Ausführen von Schritt S6);

S5) Starten des Spülvorgangs unter Verwendung des Waschwassers in der äußeren Trommel, bei gleichzeitigem Ausführen von Schritt S3) und Schritt S4); und

S6) nach Beendigung des Spülvorgangs, vollständiges Ablassen des Wassers in der äußeren Trommel und der Ausflockungstrommel und Reinigen der Ausflockungstrommel.

9. Ausflockungswaschmaschine, die das Steuerungsverfahren nach einem der Ansprüche 1 bis 8 anwendet, wobei die Ausflockungswaschmaschine eine äußere Trommel zur Aufnahme von Waschwasser und eine Zirkulationswasserbehandlungsvorrichtung umfasst, die eine mit der äußeren Trommel in Verbindung stehende Ausflockungstrommel und einen Ausflockungsmittelzuführer einschließt, durch den ein Ausflockungsmittel der Ausflockungstrommel zugeführt wird, wobei Wasser von der äußeren Trommel in die Ausflockungsstrommel zur Ausflockungsbehandlung entleert wird;

wobei ein Durchflusssensor an einer Wassereinlassstruktur der Waschmaschine angeordnet ist und/oder ein Flüssigkeitspegelsensor in einer äußeren Trommel angeordnet ist, um eine Menge des Waschwassers V zu erfassen; und ein Durchflusssensor an einem automatischen Waschmittelzuführer angeordnet ist, um eine Menge eines zugeführten Waschmittels m zu erfassen.

10. Waschmaschine nach Anspruch 9, wobei ein in der Ausflockungstrommel angeordneter Flüssigkeitspegelsensor und/oder ein Durchflusssensor an einem Rohr zur Verbindung der äußeren Trommel mit der Ausflockungstrommel angeordnet ist, um eine Wassermenge in der Ausflockungstrommel zu erfassen; und

ein Durchflusssensor an einem automatischen Ausflockungsmittelzuführer angeordnet ist, um eine Dosis eines Ausflockungsmittels zu ermitteln.

**Revendications**

1. Procédé de commande d'une machine à laver à floculation, ladite machine à laver à floculation comprenant un tambour extérieur pour contenir l'eau de lavage et un dispositif de traitement de l'eau de circulation comprenant un tambour de floculation en communication avec le tambour extérieur et un élément qui délivre un floculant par lequel un floculant est délivré au tambour de floculation, cependant que l'eau du tambour extérieur est évacuée dans le tambour de floculation pour traitement par floculation et cependant que la quantité d'eau traitée dans une circulation de floculation est une quantité d'eau dans le tambour de floculation pendant le traitement par floculation ;

**caractérisé par**

l'acquisition d'une quantité d'eau de lavage V et d'une quantité de lessive délivrée m dans un processus de lavage pour obtenir une concentration de lessive $C = m / V$ ;

la détermination d'un nombre de fois N de la circulation de floculation de l'eau de lavage et d'une dose d'un floculant $M_n$ correspondant à chaque circulation de floculation selon la concentration de lessive C.

2. Procédé selon la revendication 1 comprenant les étapes spécifiques suivantes :

1) l'obtention de la quantité d'eau de lavage V par la sélection d'un utilisateur et/ou une détection de la machine à laver et la mise en œuvre d'une quantité correspondante $V_1$ d'eau traitée dans chaque circulation de floculation et une quantité $V_2$ d'eau résiduelle après traitement et retour et obtention d'un taux de dilution $\mu$ après chaque traitement par floculation selon $\mu = (V_1 - V_2) / (V - V_2)$ ;

2) l'obtention d'une concentration de lessive $C_n$ dans un tambour extérieur après un n-ième temps de circulation de floculation selon $C_n = C \mu^n$ qui est n'importe quel nombre entier plus grand que 0 ;

3) la comparaison de $C_n$ avec une valeur fixée $C_{min}$ pour obtenir le nombre de fois N de circulation de floculation et

4) l'obtention d'une dose de floculant $M_n$ délivrée dans le n-ième temps de circulation de floculation selon $M_n = (V_1 - V_2) * \alpha C \mu^{n-1}$.

3. Procédé selon la revendication 2, cependant que la quantité $V_1$ d'eau traitée dans chaque circulation de floculation est une capacité maximale d'un tambour de floculation lorsque la quantité d'eau de lavage V est plus grande qu'une valeur fixée et la quantité $V_1$ d'eau traitée dans chaque circulation de floculation est de 4/5 à 1/2 de la capacité maximale du tambour de floculation lorsque la quantité d'eau de lavage V est plus petite que la valeur fixée.

4. Procédé selon la revendication 2, cependant que la quantité $V_2$ d'eau résiduelle après traitement et retour est une quantité d'eau résiduelle dans un tambour de floculation après le traitement par floculation et $V_2$ est une valeur fixée plus petite que la 1/2 d'une capacité maximale du tambour de floculation.

5. Procédé selon la revendication 2, cependant qu'une valeur $C_n$ la plus proche de la valeur fixée $C_{min}$ et plus petite que $C_{min}$ est déterminée et ensuite le nombre de fois N de circulation de floculation est n correspondant à la valeur déterminée.

6. Procédé selon la revendication 2, cependant qu'à l'étape 4) une dose $M_1$ du floculant délivré dans un premier temps de circulation de floculation répond à

$$M_1 = \alpha\ m\ V_1\ /\ V = V_1\ \alpha\ C.$$

7. Procédé selon l'une quelconque des revendications 1 à 6, cependant qu'après l'achèvement du processus de lavage de la machine à laver, un processus de rinçage commence à se dérouler en utilisant l'eau de lavage et simultanément l'eau de lavage est soumise à N fois la circulation de floculation et le floculant est délivré dans le tambour de floculation en une quantité $M_n$ dans chaque circulation de floculation.

8. Procédé selon la revendication 7, cependant qu'un processus de travail spécifique de la machine à laver est comme suit :

   S1) obtention de la quantité d'eau de lavage V et de la quantité de lessive délivrée m par détection après que la machine à laver démarre le déroulement du processus de lavage et obtention de la concentration de lessive C selon C = m / V ;
   S2) détermination du nombre de fois N de la circulation de floculation de l'eau de lavage et de la dose de floculant $M_n$ délivrée correspondant à chaque circulation de floculation selon la concentration de lessive C ;
   S3) après achèvement du processus de lavage, écoulement de l'eau de lavage se trouvant dans un tambour extérieur dans le tambour de floculation jusqu'à ce que la quantité $V_1$ d'eau de lavage soit dans le tambour de floculation, amenée du floculant dans la quantité de $M_n$ dans le tambour de floculation, réalisation du traitement par floculation de l'eau de lavage dans le tambour de floculation et ensuite écoulement de retour de l'eau se trouvant dans le tambour de floculation dans le tambour extérieur jusqu'à ce qu'il y ait une quantité $V_2$ d'eau résiduelle dans le tambour de floculation ;
   S4) ajout d'un au nombre de fois de circulation de floculation pour obtenir une valeur augmentée et détermination du fait que la valeur augmentée atteint N ou pas ; si ce n'est pas le cas, exécution en continu de l'étape S3) en substituant la valeur augmentée dans l'étape S3) en tant que n et si oui, réalisation de l'étape S6) ;
   S5) démarrage du déroulement du processus de rinçage en utilisant l'eau de lavage dans le tambour extérieur tout en exécutant l'étape S3) et l'étape S4) et
   S6) après achèvement du processus de rinçage, évacuation complète de l'eau dans le tambour extérieur et le tambour de floculation et nettoyage du tambour de floculation.

9. Machine à laver à floculation qui adopte le procédé de commande selon l'une quelconque des revendications 1 à 8, ladite machine à laver à floculation comprenant un tambour extérieur pour contenir l'eau de lavage et un dispositif de traitement d'eau de circulation comprenant un tambour de floculation en communication avec le tambour extérieur et un élément qui délivre le floculant par lequel un floculant est délivré dans le tambour de floculation, cependant que de l'eau du tambour extérieur est évacuée dans le tambour de floculation pour traitement par floculation ;
   cependant qu'un capteur de débit est placé sur une structure de prise d'eau de la machine à laver et/ou un détecteur de niveau de liquide est placé dans un tambour extérieur pour détecter une quantité d'eau de lavage V et un détecteur d'écoulement est placé sur un élément automatique qui délivre la lessive pour détecter une quantité de lessive délivrée m.

10. Machine à laver selon la revendication 9, cependant qu'un détecteur de niveau de liquide placé dans le tambour de floculation et/ou un détecteur d'écoulement est placé sur un tuyau pour relier le tambour extérieur au tambour de floculation pour détecter une quantité d'eau dans le tambour de floculation ; et un détecteur d'écoulement est placé sur un élément automatique qui délivre le floculant pour détecter une dose de floculant.

**Fig. 1**

start

opening an
inlet valve

delivering a detergent
and measuring a dose of
the detergent

no

judging whether
a set water level is
reached?

yes

obtaining a
concentration of
the detergent C

calculating a number of times
of flocculation circulation N
and a dose of a flocculant
corresponding to each time of
flocculation circulation $M_n$

washing for a
set time

performing flocculation
treatment on water and
returning the water for rinsing

no

judging whether
an accumulated number of
times=N?

yes

draining water and
completing the rinsing
procedure

**Fig. 2**

Step 1) obtaining a dilution rate $\mu$ after each time of flocculation treatment according to $\mu = (V_1 - V_2) / (V - V_2)$

Step 2) obtaining a concentration of the detergent in a water containing drum after the n-th time of flocculation circulation $C_n$ according to $C_n = C \mu^n$

Step 3) comparing $C_n$ with a set value $C_{min}$ to obtain the number of times of flocculation circulation N

Step4) obtaining a dose of the flocculant in the n-th time of flocculation circulation $M_n$ according to $M_n = (V_1 - V_2) * \alpha C \mu^{n-1}$

# Fig. 3

```
            ┌──────────────────────┐
            │ returning an accumulated │
            │      value to 1          │
            └──────────┬───────────┘
                       │
                       ▼
              ╱─────────────────╲
             ╱  judging whether C1 ╲───────────────┐
             ╲  is larger than Cmin ╱               │
              ╲─────────┬─────────╱                 │
                        │                           │
                        ▼                           │
              ┌──────────────────┐                  │
              │   adding 1 to the  │                │
              │  accumulated value │                │
              └────────┬─────────┘                  │
                       │                            │
                       ▼                            │
              ╱─────────────────╲        ┌─────────────────────┐
             ╱  judging whether C2 ╲─────▶│    outputting the     │
             ╲  is larger than Cmin ╱     │ accumulated value as the│
              ╲─────────┬─────────╱       │   number of times of    │
                        │                 │ flocculation circulation N│
                        ▼                 └─────────────────────┘
              ┌──────────────────┐
              │   adding 1 to the  │
              │  accumulated value │
              └────────┬─────────┘
                       │
                       ▼
              ╱─────────────────╲
             ╱  judging whether C3 ╲───────────────┘
             ╲  is larger than Cmin ╱
              ╲─────────────────╱

                       ·
                       ·
                       ·
                       ·
                       ·
```

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104372574 A

- US 20130327361 A1